Europäisches Patentamt

European Patent Office

Office européen des brevets

(11) Veröffentlichungsnummer: **0 279 075**

**A2**

## (12) EUROPÄISCHE PATENTANMELDUNG

(21) Anmeldenummer: 87119222.5

(22) Anmeldetag: 24.12.87

(51) Int. Cl.⁴: **A61C 3/02**

(30) Priorität: 24.01.87 DE 3702097

(43) Veröffentlichungstag der Anmeldung:
24.08.88 Patentblatt 88/34

(84) Benannte Vertragsstaaten:
AT BE CH DE ES FR GB GR IT LI LU NL SE

(71) Anmelder: **Staude, Aribo**
**Falkenstrasse 18**
**D-7053 Kernen(DE)**

(72) Erfinder: **Staude, Aribo**
**Falkenstrasse 18**
**D-7053 Kernen(DE)**

(74) Vertreter: **Hoeger, Stellrecht & Partner**
**Uhlandstrasse 14c**
**D-7000 Stuttgart 1(DE)**

(54) **Bohrer zur Präparation von Zähnen.**

(57) Um einen Bohrer zur Präparation von Zähnen mit einem um eine Achse drehbaren Schaft, welcher an einem vorderen Schaftteil einen ersten Bohrkörper mit in radialem Abstand zur Achse angeordneten Schneiden trägt, zu schaffen, welcher beim Durchführen der Zahnpräparation ein stellenweise zu tiefes Einfräsen verhindert und genau geführt werden kann, insbesondere bei einer Rillenpräparation die Gewähr dafür bietet, daß keine zu tiefen Rillen in den Zahn eingearbeitet werden, wird vorgeschlagen, daß an einer dem Schaft gegenüberliegenden Seite des ersten Bohrkörpers eine zur Achse rotationssymmetrische schneidenfreie Stützfläche vorgesehen ist, deren größte radiale Erstreckung kleiner ist als die des Bohrkörpers.

*FIG. 1*

## Bohrer zur Präparation von Zähnen

Die Erfindung betrifft einen Bohrer zur Präparation von Zähnen mit einem um eine Achse drehbaren Schaft, welcher an einem vorderen Schaftteil einen ersten Bohrkörper mit in radialem Abstand zur Achse angeordneten Schneiden trägt.

Zur Präparation von Zähnen, d.h. zum Abschleifen der Zähne, um eine Krone auf diese aufsetzen zu können, ist eine Vielzahl von Bohrern bekannt, deren Bohrkörper eine beliebige Form haben können. Diesen Bohrern ist jedoch gemeinsam, daß der Bohrkörper am vorderen Schaftteil angeordnet ist und gleichzeitig auch den vorderen Abschluß des Schaftes bildet, so daß mit einem solchen Bohrer sowohl in Richtung seiner Achse als auch quer zu dieser gearbeitet werden kann.

Bei der Präparation von Zähnen besteht nun das Problem, daß auf der einen Seite möglichst viel von dem Zahn abgetragen werden muß, um ausreichend Raum für die spä ter aufzusetzende Krone zu haben, andererseits jedoch die Zahnhöhle oder Pulpa und der in dieser liegende Zahnnerv unter keinen Umständen verletzt werden dürfen. Hierzu hat der Zahnarzt, wenn er anfängt, den Zahn auf einer Seite abzutragen, keine Anhaltspunkte, da er dann nicht weiß, wieviel er bereits von dem Zahn abgetragen hat oder nicht, so daß eine große Wahrscheinlichkeit dafür besteht, daß zuviel abgetragen wird und somit die Zahnhöhe oder Pulpa und der darin liegende Nerv sowie der Wurzelkanal von außen verletzt werden.

Aus diesem Grund wird zunächst eine Rillenpräparation vorgeschlagen, bei welcher in den noch unbeschliffenen Zahn in Abständen Rillen eingefräst werden, deren Tiefe so zu wählen ist, daß sie einer Präparationstiefe entspricht. Mit einer solchen Präparationsmethode hat der Zahnarzt einen Anhaltspunkt dafür, wie tief er, ausgehend von der ursprünglichen Zahnform, in diesen bereits eingeschliffen hat. Nach dem Einarbeiten der Rillen, deren Tiefe sich sehr gut abschätzen läßt, werden die zwischen den Rillen liegenden Bereiche abgearbeitet, so daß mit dieser Präparationsmethode die Gewähr besteht, daß die Zahnhöhle oder Pulpa nicht verletzt wird.

Nach der Rillenpräparation ist eine Präparation des Zahns im Bereich des Zahnfleischrandes durchzuführen, welche als Stufen-oder Hohlkehlenpräparation bezeichnet wird.

Bei derartigen Präparationen werden entweder sogenannte Rosenbohrer, d.h. Bohrer mit einem an das vordere Schaftteil angeformten kugelförmigen Bohrkörper, oder Bohrer mit einem langgestreckten, vorne spitz zulaufenden Bohrkörper verwendet.

Bei Verwendung dieser Bohrer besteht auch beim Durchführen einer Rillenpräparation immer noch die Gefahr, daß der Zahnarzt hierbei zu tiefe Rillen fräst und somit zu tief in den Zahn hineinarbeitet und daher, beispielsweise bei einer geringen Unachtsamkeit, auch die Zahnhöhle oder Pulpa und somit den Nerv verletzen kann. Auch bei der Stufen-oder Hohlkehlenpräparation ist eine exakte Führung des Bohrers am Zahnfleischrand nur schwer möglich und führt daher auch zu Verletzungen des Zahnfleisches in diesem Bereich.

Ausgehend von einem Bohrer der gattungsgemäßen Art liegt der Erfindung die Aufgabe zugrunde, einen Bohrer zu schaffen, welcher beim Durchführen der Zahnpräparation ein stellenweise zu tiefes Einfräsen verhindert und genau geführt werden kann, insbesondere bei einer Rillenpräparation die Gewähr dafür bietet, daß keine zu tiefen Rillen in den Zahn eingearbeitet werden.

Diese Aufgabe wird erfindungsgemäß bei einem Bohrer der eingangs beschriebenen Art dadurch gelöst, daß an einer dem Schaft gegenüberliegenden Seite des ersten Bohrkörpers eine zur Achse rotationssymmetrische schneidenfreie Stützfläche vorgesehen ist, deren größte radiale Erstreckung kleiner ist als die des Bohrkörpers.

Ein derart ausgebildeter Bohrer bietet den großen Vorteil, daß die Präparationstiefe durch den Bohrer, näm lich durch den Abstand zwischen der maximalen radialen Erstreckung der Stützfläche und der maximalen radialen Erstreckung des Bohrkörpers, vorher wählbar ist. Sobald diese durch den Bohrer vorgegebene Präparationstiefe oder Rillentiefe erreicht ist, kommt die Stützfläche mit dem neben der einzuarbeitenden Rille noch unversehrt stehengebliebenen Material des Zahns in Berührung und dient als Anschlag, so daß es gar nicht möglich ist, auch nicht bei einer Unachtsamkeit, mit einem derartigen Bohrer eine tiefere Rille in einen Zahn einzuarbeiten. Der Zahnarzt kann also somit mit einem solchen Bohrer eine Rille in den zu präparierenden Zahn einarbeiten, ohne daß er Angst haben muß, daß die Rille zu tief wird und somit eine Verletzung der Zahnhöhle oder Pulpa und des darin enthaltenen Nervs die Folge ist. Einen ähnlichen Vorteil bietet die Stützfläche bei der Durchführung einer Stufen-oder Hohlkehlenpräparation im Bereich des Zahnfleischrandes. Der Bohrer wird mit seiner Achse ungefähr parallel zur Zahnlängsachse angesetzt, und mit dem Stützkörper kann zwischen dem Zahn und dem diesen überdeckenden Zahnfleisch hineingefahren werden, so daß der Bohrer auf dem Zahn eine Stütze findet und ein Fräsen einer gleichmäßig tiefen Stufe oder Hohlkehle rings um den Zahn ermöglicht.

Der Grundgedanke der vorliegenden Erfindung besteht also darin, einem Bohrkörper eine Stützfläche zuzuordnen, wobei die Präparations- oder Rillentiefe durch die Unterschiede in der radialen Erstreckung der Stützfläche und des Bohrkörpers festgelegt sind.

Ein solcher Bohrer kann bei allen möglichen Typen von Zähnen, d.h. sowohl bei flachen als auch bei runden Zähnen zum Einsatz kommen. Um jedoch bei flachen Zähnen ein möglichst schnelles und effektives Anfräsen der Rillen zu ermöglichen, ist es vorteilhaft, wenn vor dem ersten Bohrkörper ein zweiter Bohrkörper angeordnet ist, so daß mit einem Bohrvorgang zwei Rillen in den Zahn eingearbeitet werden können. Bei diesem Ausführungsbeispiel zeigt sich ganz deutlich der große Vorteil der vorliegenden Erfindung, der darin besteht, daß nun nicht mehr sorgfältig die Tiefe der Rille, die man einarbeitet, überwacht werden muß, so daß bedenkenlos gleich zwei Rillen auf einmal in einen Zahn eingearbeitet werden können.

Das vorstehend genannte Ausführungsbeispiel kann insbesondere für Schneidezähne noch weiter verbessert werden, wenn vor dem ersten Bohrkörper mehrere Bohrkörper angeordnet sind, so daß beispielsweise bei Schneidezähnen über deren gesamte Breite mit einem Arbeitsgang eine Rillenpräparation vorgenommen werden kann. Die Rillen können dabei sehr nahe aneinander liegen, so daß das spätere Abarbeiten des zwischen den Rillen stehengebliebenen Materials ebenfalls problemlos möglich ist.

Bei den vorstehend genannten Ausführungsbeispielen des erfindungsgemäßen Bohrers ist lediglich zu fordern, daß vor dem ersten Bohrkörper eine Stützfläche anzuordnen ist. Wo diese Stützfläche nun genau liegt, braucht vom Grundgedanken der Erfindung her gesehen nicht eindeutig festgelegt sein. Beispielsweise ist es auch bei einem Bohrer mit mehreren Bohrkörpern von Vorteil, wenn die Stützfläche vor dem vordersten Bohrkörper angeordnet ist, so daß dieser auch zum Bearbeiten von runden Zähnen eingesetzt werden kann, wobei dann hauptsächlich der vorderste Bohrkörper in Zusammenarbeit mit der Stützfläche zum Einsatz kommt.

Bei einem weiteren Ausführungsbeispiel, das speziell auf die Bearbeitung von flachen Zähnen zugeschnitten ist, ist es von Vorteil, wenn die Stützfläche zwischen den Bohrkörpern angeordnet ist, so daß der Bohrer an seinem vordersten Ende mit einem Bohrkörper abschließt. In diesem Fall bleibt beim Einarbeiten von Rillen zwischen den Bohrkörpern Zahnmaterial stehen, auf welchem sich dann die zwischen den Bohrkörpern liegende Stützfläche beim Erreichen der erforderlichen Präparations- oder Rillentiefe abstützen kann.

Selbstverständlich liegt es auch im Rahmen der vorliegenden Erfindung, bei einem Ausführungsbeispiel sowohl vor dem vordersten Bohrkörper eine Stützfläche vorzusehen als auch zwischen den Bohrkörpern, so daß ein solcher Bohrer universell einsetzbar ist.

Auch bei der Ausgestaltung der einzelnen Stützflächen sind grundsätzlich beliebige Formen denkbar.

Beispielsweise ist bei einem besonders bevorzugten Ausführungsbeispiel vorgesehen, daß die Stützfläche sich nach vorne verjüngt, was den Vorteil hat, daß der Bohrer auch mit zur Oberfläche des Zahns geneigter Achse angesetzt werden kann und gleichzeitig noch durch Variation des Neigungswinkels der Bohrerachse zur Oberfläche des Zahns eine geringe Variation der Präparations- oder Rillentiefe möglich ist.

Des weiteren ist es günstig, wenn die Stützfläche vorne abgerundet ist, so daß eine Verletzungsgefahr oder ein Beschädigen des Zahns mit einem solchen Bohrer vermieden wird und außerdem die Abrundung ein nahezu beliebiges Ansetzen eines derartigen Bohrers erlaubt.

Besonders bevorzugt kann es bei einer Weiterbildung eines Bohrers gemäß den vorstehend genannten Ausführungsbeispielen sein, wenn die Stützfläche nach vorne konisch zuläuft, da dies ein schräges Ansetzen des erfindungsgemäßen Bohrers begünstigt.

Bei einem weiteren Ausführungsbeispiel ist vorgesehen, daß die Stützfläche ungefähr halbelipsoidförmig ausgebildet ist, d.h. daß sie zum einen abgerundet ist und sich zum anderen verjüngt, um beim Aufsetzen der Stützfläche auf dem Zahn ein Wegrutschen des Bohrers zu verhindern.

Besonders bevorzugt ist ein Ausführungsbeispiel, bei dem die Stützfläche ungefähr halbkugelförmig ausgebildet ist. Dies ist dann vorteilhaft, wenn die Stützfläche in Längsrichtung der Achse möglichst kurz bemessen sein soll, um vor allem in den Bereichen eines Zahns gut arbeiten zu können, die dem benachbarten Zahn zugewandt sind.

Insbesondere bei Stützflächen, die zwischen zwei Bohrkörpern angeordnet sind, bietet es sich an, diese der Einfachheit halber zylindrisch auszugestalten.

Die zylindrische Ausgestaltung der Stützflächen kann jedoch insbesondere bei flachen Zähnen dazu führen, daß diese in einem breiten Bereich auf dem zwischen zwei Bohrkörpern stehenbleibenden Zahnmaterial zur Anlage kommen und somit eine große Reibung erzeugt wird, welche zu einem Verrutschen des Bohrers führen kann. Aus diesem Grund ist es vorteilhafter, wenn die Stützfläche auf dem Zahnmaterial lediglich linienförmig zur Anlage kommen kann. Hierfür ist es vorteilhaft, wenn die Stützfläche ballig ausgebildet ist, da die ballige Wölbung in Verbindung mit einer stets geringen Wölbung des Zahns eine linienförmige Anlagefläche gewährleistet.

Letztlich kann es aber auch für besondere Anwendungsfälle, beispielsweise beim Bearbeiten von runden Zähnen, vorteilhaft sein, wenn die Stützfläche eine Einschürung aufweist, d.h. also in Längsrichtung konkav ausgebildet ist, um zu gewährleisten, daß mit zwei beiderseits der Stützfläche angeordneten Bohrkörpern auch bei runden Zähnen zwei Rillen auf einmal eingearbeitet werden können.

Bei den bisher beschriebenen Merkmalen der einzelnen Ausführungsbeispiele werden keine näheren Angaben über die Form der Bohrkörper gemacht.

So ist es beispielsweise günstig, wenn der Bohrkörper in einer durch die Achse verlaufenden Schnittebene einen ovalen oder elipsenförmigen Querschnitt aufweist. Diese Bohrkörper eignen sich gut, um tiefe Rillen zu fräsen.

Wenn die Rillen nicht so tief, jedoch breiter ausgeführt werden sollen, ist es zweckmäßig, wenn der Bohrkörper in einer durch die Achse verlaufenden Schnittebene einen parabolischen Querschnitt aufweist.

Für tiefe Rillen mit steilen Kanten eignet sich am besten ein Bohrkörper, bei welchem vorgesehen ist, daß der Bohrkörper in einer durch die Achse verlaufenden Schnittebene einen im wesentlichen rechteckigen Querschnitt aufweist. Dieser Bohrkörper ist außerdem auch noch dazu geeignet, am unteren Rand des zu präparierenden Zahns eine Stufenpräparation vorzunehmen, bei welcher in Höhe des Zahnfleischrandes rings um den Zahn eine Stufe angefräst wird, an welcher die später aufzusetzende Krone abschließt.

Besonders geeignet für ein abschließendes Beschleifen des Zahns nach der Rillenpräparation, unter anderem auch zum Abtragen von zwischen den Rillen stehengebliebenem Zahnmaterial, ist ein Bohrkörper, der so ausgebildet ist, daß der Bohrkörper in einer durch die Achse verlaufenden Schnittebene einen parabolischen Querschnitt aufweist. Ein derartiger Bohrkörper erlaubt mit seiner runden Spitze auch eine Hohlkehlenpräparation im Bereich des Zahnfleischrandes.

Weitere Merkmale und Vorteile der Erfindung sind Gegenstand der folgenden zeichnerischen Darstellung sowie der Beschreibung einiger Ausführungsbeispiele eines erfindungsgemäßen Bohrers. In der Zeichnung zeigen:

Fig. 1 ein erstes Ausführungsbeispiel eines erfindungsgemäßen Bohrers;

Fig. 2 ein zweites Ausführungsbeispiel eines erfindungsgemäßen Bohrers;

Fig. 3 ein drittes Ausführungsbeispiel eines erfindungsgemäßen Bohrers;

Fig. 4 ein viertes Ausführungsbeispiel eines erfindungsgemäßen Bohrers;

Fig. 5 eine schematische Darstellung einer Rillenpräparation, durchgeführt mit dem Bohrer gemäß dem ersten Ausführungsbeispiel;

Fig. 6 eine schematische Darstellung einer Rillenpräparation mit dem Bohrer gemäß dem dritten Ausführungsbeispiel;

Fig. 7 eine schematische Darstellung einer Hohlkehlenpräparation.

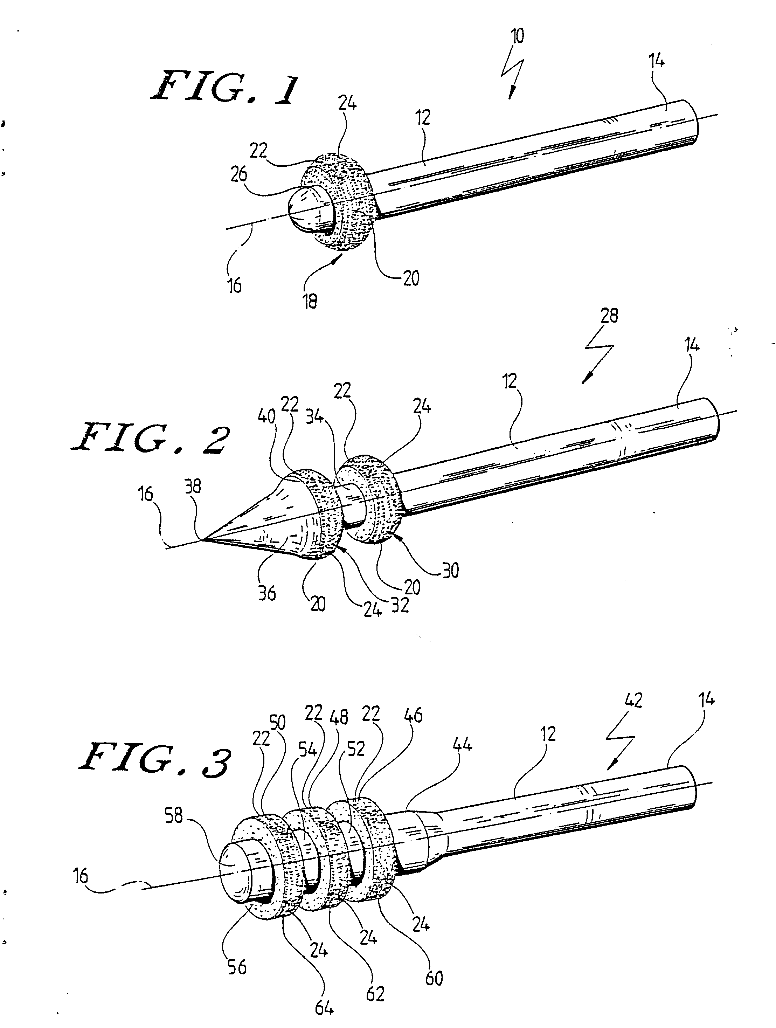

Ein in Fig. 1 als Ganzes mit 10 bezeichnetes erstes Ausführungsbeispiel eines erfindungsgemäßen Bohrers umfaßt einen Schaft 12, welcher mit einem Ansatz 14 in eine zeichnerisch nicht dargestellte Aufnahme eines Antriebs, insbesondere einer flexiblen Antriebswelle, einsetzbar ist und durch diesen um eine Längsachse 16 drehbar ist.

Der Schaft 12 trägt an einem vorderen, dem Ansatz 14 gegenüberliegenden Ende einen zur Achse 16 rotationssymmetrischen Bohrkörper 18 mit einer sich in radialer Richtung über den Schaft 12 hinaus erstreckenden Oberfläche 20. Bevorzugterweise besitzt der Bohrkörper 18 in einer durch die Achse 16 hindurchgehenden Schnittebene einen ovalen Querschnitt.

Die Oberfläche 20 des Bohrkörpers 18 ist mit als Schneiden 22 dienenden Diamantsplittern 24 besetzt, so daß mit der gesamten Oberfläche 20 ein Abtrag von Zahnschmelz und Zahnbein möglich ist.

Auf einer dem Schaft 12 gegenüberliegenden Seite des Bohrkörpers 18 ist eine zur Achse 16 rotationssymmetrische Stützfläche 26 vorgesehen, welche im vorliegenden ersten Ausführungsbeispiel die Form einer Kugelkappe aufweist und in ihrer radialen Erstreckung ungefähr dem Durchmesser der Achse 16 entspricht. Um bei einer Rillenpräparation eines Zahnes als Tiefenanschlag wirken zu können, ist es erforderlich, daß die Stützfläche 26 eine schneidenfreie und möglichst blanke Oberfläche aufweist.

Ein zweites Ausführungsbeispiel 28 des erfindungsgemäßen Bohrers, dargestellt in Fig. 2, ist, soweit identische Teile vorhanden sind, mit denselben Bezugszeichen versehen. Bezüglich der Beschreibung dieser Teile wird auf die Ausführungen zum ersten Ausführungsbeispiel verwiesen.

Im Gegensatz zum ersten Ausführungsbeispiel zeigt das zweite nicht einen Bohrkörper 18, sondern einen an dem dem Ansatz 14 gegenüberliegenden Ende des Schaftes 12 angeordneten ersten Bohrkörper 30, sowie einen in Richtung der Achse 16 vor dem ersten Bohrkörper 30 angeordneten zweiten Bohrkörper 32, die sich beide in radialer Richtung über den Schaft 12 hinaus erstrecken und auf ihren Oberflächen 20 mit als Schneiden 22 dienenden Diamantsplittern 24 besetzt sind. Zwischen dem ersten Bohrkörper 30 und dem zweiten Bohrkörper 32 ist eine zur Achse 16 rotationssymmetrische erste Stützfläche 34 vorgesehen, welche in ihrer radialen Erstreckung ungefähr dem Durchmesser des Schaftes 12 entspricht. Diese erste Stützfläche 34 ist genau wie die Stützfläche 26 des ersten Ausführungsbeispiels möglichst glatt, so daß durch diese kein Materialabtrag am Zahn erfolgen kann.

Des weiteren ist in Richtung 16 vor dem zweiten Bohrkörper 32 eine zweite Stützfläche 36 vorgesehen, welche mit ihrem dem zweiten Bohrkörper 32 entgegengesetzten vorderen Ende 38 konisch zuläuft und eine Spitze bildet, während sich deren hinteres, dem zweiten Bohrkörper 32 zugewandtes Ende 40 an diesen anschließt und eine radiale Erstreckung zeigt, welche die der ersten Stützfläche 34 übersteigt. Selbstverständlich ist die zweite Stützfläche 36 genauso wie die erste Stützfläche 34 möglichst blank ausgebildet.

Ein in Fig. 3 dargestelltes drittes Ausführungsbeispiel 42 des erfindungsgemäßen Bohrers ist,soweit identische Teile vorhanden sind, mit denselben Bezugszeichen wie die ersten beiden Ausführungsbeispiele versehen. Bezüglich deren Beschreibung wird auf die entsprechende Beschreibung bei den ersten beiden Ausführungsbeispielen verwiesen.

Im Gegensatz zu den bisher beschriebenen Ausführungsbeispielen ist der Schaft 12 in einem vorderen dem Ansatz 14 entgegengesetzten Teilbereich 44 verdickt ausgebildet.

An diesen verdickt ausgebildeten Teilbereich 44 schliessen sich in Richtung der Achse 16 nach vorne ein erster Bohrkörper 46, ein zweiter Bohrkörper 48 und ein dritter Bohrkörper 50 an, welche alle in Richtung der Achse 16 einen Abstand voneinander aufweisen.

Zwischen dem ersten Bohrkörper 46 und dem zweiten Bohrkörper 48 ist eine erste Stützfläche 52 und zwischen dem zweiten Bohrkörper 48 und dem dritten Bohrkörper 50 eine zweite Stützfläche 54 vorgesehen, welche beide rotationssymmetrisch zur Achse 16 ausgebildet sind und eine zylindrische Oberfläche aufweisen.

Des weiteren schließt sich an den dritten Bohrkörper 50 nach vorne in Richtung der Achse 16 eine dritte Stützfläche 56 an, welche ebenfalls rotationssymmetrisch zur Achse 16 und zylindrisch ausgebildet ist sowie eine vordere senkrecht zur Achse 16 verlaufende Stirnfläche 58 besitzt.

Alle drei Stützflächen 52, 54 und 56 haben ungefähr denselben Durchmesser wie der Teilbereich 44 des Schaftes 12.

Ferner sind alle drei Bohrkörper 46, 48 und 50 so ausgebildet, daß sie zylindrische Oberflächen 60, 62 und 64 aufweisen und in einer durch die Achse 16 verlaufenden Schnittebene einen rechteckigen Querschnitt zeigen. Somit kommen für einen Materialabtrag beim Bearbeiten eines Zahns lediglich die zylindrischen Oberflächen 60, 62 und 64 in Frage, so daß auch nur diese mit als Schneiden 22 dienenden Diamantsplittern 24 besetzt sind.

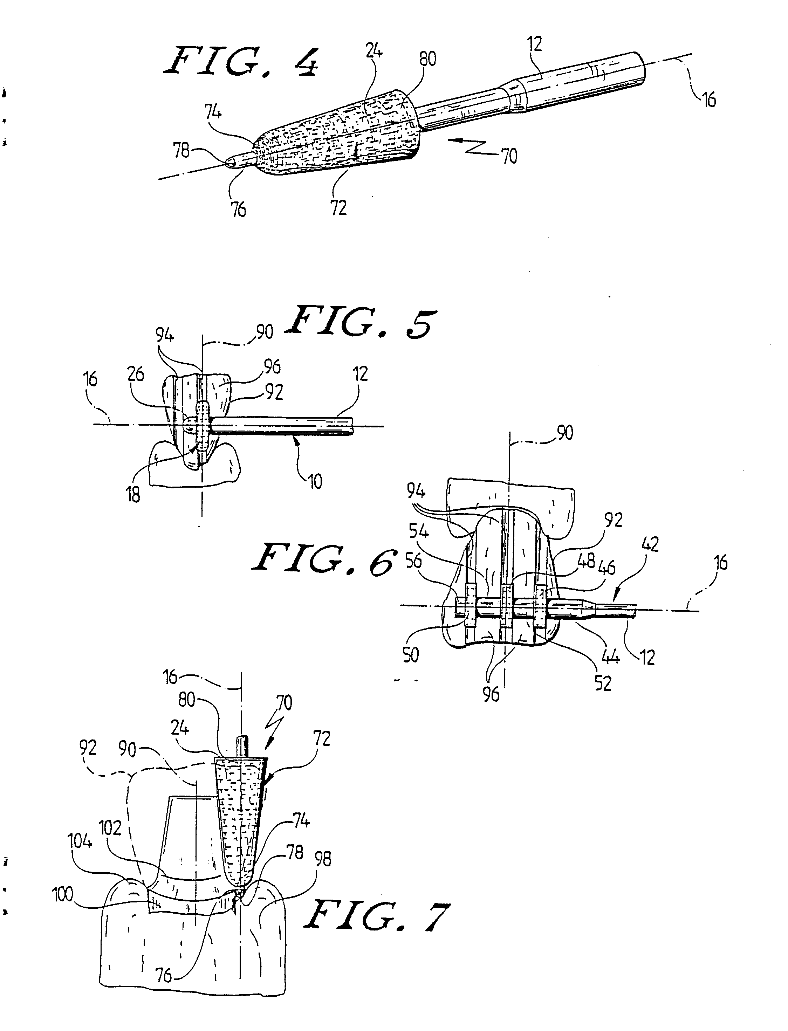

Ein in Fig. 4 dargestelltes viertes Ausführungsbeispiel 70 eines erfindungsgemäßen Bohrers ist, soweit die Teile mit denen des ersten Ausführungsbeispiels identisch sind, mit denselben Bezugszeichen versehen, so daß bezüglich deren Beschreibung auf die Beschreibung des ersten Ausführungsbeispiels verwiesen wird.

Ein auf dem dem Ansatz 14 des Schafts 12 gegenüberliegenden Ende angeordneter rotationssymmetrischer Bohrkörper 72 besitzt eine Paraboloidform, wobei eine Achse des Paraboloids koaxial zu der Achse 16 liegt und der Schaft 12 auf einem einem abgerundeten Ende 74 des Paraboloids entgegengesetzten Ende angesetzt ist.

Das abgerundete Ende 74 des Paraboloids trägt eine koaxial zur Achse 16 verlaufende Stützfläche 76, welche sich in Richtung der Achse 16 erstreckt, eine längliche Form aufweist und eine abgerundete Spitze 78 besitzt.

Wie bei den vorstehend beschriebenen Ausführungsbeispielen ist eine Oberfläche 80 des Bohrkörpers 72 mit Diamantsplittern 24 besetzt, während die Stützfläche 76 selbst eine - schneidenfreie und möglichst blanke Oberfläche aufweist.

Bei weiteren Modifikationen des vierten Ausführungsbeispiels 70 kann auch noch vorgesehen sein, daß hinter dem Bohrkörper 72 auf dem Schaft 12 noch weitere Bohrkörper, wie beispielsweise bei dem zweiten und dritten Ausführungsbeispiel,angeordnet sind, deren Form entsprechend dem jeweils gewünschten Verwendungszweck angepaßt sind.

Bei allen vier beschriebenen Ausführungsbeispielen wurden rotationssymmetrische Bohrkörper 18, 30, 32, 46, 48, 50, 72 verwendet. Es liegt jedoch ebenfalls im Rahmen der Erfindung, die genannten Bohrkörper nicht vollständig rotationssymmetrisch auszubilden, sondern geringe Abweichungen von der Rotationssymmetrie zuzulassen, um eine verbesserte Fräswirkung zu erzielen. Beispielsweise könnte die rotationssymmetrische Form noch auf ihrer Oberfläche ein wellenförmige Struktur tragen, welche insbesondere zum groben und schnellen Abtragen von Zahnmaterial vorteilhaft ist.

Außerdem ist, insbesondere bei den Ausführungsbeispielen 2 und 3, aber auch beim Ausführungsbeispiel 4,. anzumerken, daß mehrere Bohrkörper unterschiedlichster Form entsprechend dem jeweiligen Verwendungszweck miteinander kombiniert werden können.

Schließlich weisen erfindungsgemäß alle Bohrer das gemeinsame Merkmal auf, daß die Unterschiede zwischen der maximalen radialen Erstreckung der Stützflächen 26, 34, 36, 52, 54, 56, 76 und der maximalen radialen Erstreckung der Bohrkörper 18, 30, 32, 46, 48, 50, 72 ungefähr im Bereich von 0,5 bis 1,5 mm liegen. Vorzugsweise wird bei den erfindungsgemäßen Bohrern ein Unterschied im Bereich von 0,8 bis 1,2 mm gewählt werden.

Ein Einsatz der erfindungsgemäßen Bohrer zur Präparation eines Zahnes ist in den Fig. 5, 6 und 7 schematisch dargestellt.

Fig. 5 zeigt den Einsatz eines erfindungsgemäßen Bohrers 10 zur Rillenpräparation eines runden Zahnes. Hierzu wird der Bohrer 10 so eingesetzt, daß seine Längsachse 16 ungefähr senkrecht zu einer Längsachse 90 einer in den Zahn 92 einzufräsenden Rille 94 verläuft. Dabei stützt sich der Bohrer 10 mit seiner Stützfläche 26 auf einer der ursprünglichen Oberfläche des Zahns entsprechenden Fläche 96 ab, so daß der Bohrkörper 18 mit seinen Schneiden 26 in der Rille 94 nur einen Materialabtrag bis zu einer Tiefe vornehmen kann, welche ungefähr einer Differenz zwischen einer maximalen radialen Erstreckung des Bohrkörpers 18 und einer maximalen radialen Erstreckung der Stützfläche 26 entspricht. Somit wirkt die Stützfläche 26 als Tiefenanschlag bei der Rillenpräparation.

Fig. 6 zeigt den Einsatz eines erfindungsgemäßen Bohrers 42 bei einem flachen Zahn, wobei ebenfalls die Achse 16 des Bohrers 42 ungefähr senkrecht zu den Längsachsen 90 der Rillen 94 zu verlaufen hat. Der Vorteil des Bohrers 42 besteht darin, daß dieser das gleichzeitige Fräsen von drei Rillen erlaubt, was allerdings nur bei flachen Zähnen sinnvoll ist. Dabei ist, wie beim ersten Ausführungsbeispiel in Fig. 4 ebenfalls dargestellt, ein Materialabtrag in den Rillen 94 nur in einer solchen Tiefe möglich, welche der Differenz zwischen der radialen Erstreckung der Bohrkörper 46, 48 und 50 und der radialen Erstreckung der Stützflächen 52 und 54 und 56 entspricht.

Fig. 7 zeigt den Einsatz des vierten Ausführungsbeispiels 70 bei der Durchführung einer Hohlkehlenpräparation.

Hierbei wurde der Zahn 92 bereits in seinem oberen Bereich durch eine Rillenpräparation weitgehend bearbeitet.

Bei der Hohlkehlenpräparation wird der Bohrer 70 mit seiner Längsachse 16 so geführt, daß diese ungefähr parallel zur Längsachse 90 des Zahns 92 verläuft. Die Stützfläche 76 wird dabei zwischen einen vom Zahnfleisch 98 überdeckten Bereich 100 des Zahns 72 eingeführt, so daß der Bohrer 70 mit dieser Stützfläche 76 auf dem Bereich 100 eine Stütze findet. Anschließend wird der Bohrer 70 in dieser Stellung ringsum den Zahn herumbewegt und dadurch die Hohlkehle 102 ungefähr in Höhe eines Zahnfleischrandes 104 eingefräst, wobei insbesondere die Oberfläche 80 im Bereich des Endes 74 des Paraboloids zum Einsatz kommt und eine Form der Hohlkehle 102 einer Krümmung des Paraboloids im Bereich des Endes 74, d.h. im Bereich nahe der Stützfläche 76, entspricht. Die Form des Paraboloids des Bohrkörpers 70 ist daher entsprechend der später gewünschten Hohlkehle 102 zu wählen.

Bei einer Stufenpräparation wird im Prinzip genauso verfahren, wobei ein Bohrer entsprechend dem vierten Ausführungsbeispiel verwendet wird, bei dem allerdings der Bohrkörper 70 keine paraboloidähnliche Form, sondern eine zylinderähnliche Form aufweist, so daß keine runde Hohlkehle 102 sondern eine eckige Stufe entsteht.

## Ansprüche

1. Bohrer zur Präparation vc'n Zähnen mit einem um eine Achse drehbaren Schaft, welcher an einem vorderen Schaftteil einen ersten Bohrkörper mit in radialem Abstand zur Achse angeordneten Schneiden trägt, **dadurch gekennzeichnet,** daß an einer dem Schaft (12) gegenüberliegenden Seite des ersten Bohrkörpers (18, 30, 46, 72) eine zur Achse (16) rotationssymmetrische schneidenfreie Stützfläche (26, 34, 36, 52, 54, 56, 76) vorgesehen ist, deren größte radiale Erstreckung kleiner ist als die des Bohrkörpers (18, 30, 46, 72).

2. Bohrer nach Anspruch 1, dadurch gekennzeichnet, daß vor dem ersten Bohrkörper (30, 46) ein zweiter Bohrkörper (32, 48) angeordnet ist.

3. Bohrer nach Anspruch 2, dadurch gekennzeichnet, daß vor dem ersten Bohrkörper (46) mehrere Bohrkörper (48, 50) angeordnet sind.

4. Bohrer nach einem der Ansprüche 1 bis 3, dadurch gekennzeichnet, daß die Stützfläche (18, 36, 56, 72) vor dem vordersten Bohrkörper (26, 32, 50, 72) angeordnet ist.

5. Bohrer nach einem der Ansprüche 2 bis 4, dadurch gezeichnet, daß die Stützfläche (34, 52, 54) zwischen den Bohrkörpern (30, 32, 46, 48, 50) angeordnet ist.

6. Bohrer nach einem der voranstehenden Ansprüche, dadurch gekennzeichnet, daß die Stützfläche (26, 36, 76) sich nach vorne verjüngt.

7. Bohrer nach einem der voranstehenden Ansprüche, dadurch gekennzeichnet, daß die Stützfläche (26, 36, 76) vorne abgerundet ist.

8. Bohrer nach einem der Ansprüche 6 oder 7, dadurch gekennzeichnet, daß die Stützfläche (36) nach vorne konisch zuläuft.

9. Bohrer nach einem der Ansprüche 6 oder 7, dadurch gekennzeichnet, daß die Stützfläche (26, 36, 76) ungefähr halbelipsoidförmig ausgebildet ist.

10. Bohrer nach Anspruch 6 oder 7, dadurch gekennzeichnet, daß die Stützfläche (26) ungefähr halbkugelförmig ausgebildet ist.

11. Bohrer nach einem der voranstehenden Ansprüche, dadurch gekennzeichnet, daß die Stützfläche (34, 52, 54, 56) ungefähr zylindrisch ausgebildet ist.

12. Bohrer nach einem der voranstehenden Ansprüche, dadurch gekennzeichnet, daß die Stützfläche (34, 52, 54 56) ballig ausgebildet ist.

13. Bohrer nach einem der voranstehenden Ansprüche, dadurch gekennzeichnet, daß die Stützfläche (34, 52, 54, 56) eine Einschnürung aufweist.

14. Bohrer nach einem der voranstehenden Ansprüche, dadurch gekennzeichnet, daß der Bohrkörper (26, 30, 32, 46, 48, 50, 72) in einer durch die Achse (16) verlaufenden Schnittebene einen ovalen Querschnitt aufweist.

15. Bohrer nach einem der voranstehenden Ansprüche, dadurch gekennzeichnet, daß der Bohrkörper (26, 30, 32, 46, 48, 50, 72) in einer durch die Achse (16) verlaufenden Schnittebene einen runden Querschnitt aufweist.

16. Bohrer nach einem der voranstehenden Ansprüche, dadurch gekennzeichnet, daß der Bohrkörper (26, 30, 32, 46, 48, 50, 72) in einer durch die Achse (16) verlaufenden Schnittebene einen im wesentlichen rechteckigen Querschnitt aufweist.

17. Bohrer nach einem der voranstehenden Ansprüche, dadurch gekennzeichnet, daß der Bohrkörper (26, 30, 32, 46, 48, 50, 72) in einer durch die Achse (16) verlaufenden Schnittebene einen parabolischen Querschnitt aufweist.

FIG. 1

FIG. 2

FIG. 3

A 0590 u

0 279 075

FIG. 4

FIG. 5

FIG. 6

FIG. 7

A 0590 u.